# FASCICULE DE BREVET EUROPEEN

(11) **EP 2 834 087 B1**
(45) Date de publication et mention de la délivrance du brevet: **08.06.2016**
(21) Numéro de dépôt: 13717452.0
(22) Date de dépôt: 04.04.2013
(51) Int. Cl.: B60C 9/18, B60C 9/20

(54) **PNEUMATIQUE A CARCASSE RADIALE OU CROISEE**
REIFEN MIT EINER RADIALEN ODER SCHICHTENÜBERGREIFENDEN KARKASSE
TYRE WITH A RADIAL OR CROSS-PLY CARCASS

(30) Priorité: 06.04.2012 FR 1253192
(43) Date de publication de la demande: 11.02.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HUYGHE, Jean-Michel, F-63040 Clermont-Ferrand Cedex 9 (FR)
(74) Mandataire: Bauvir, Jacques
(86) Numéro de dépôt international: PCT/EP2013/057072
(87) Numéro de publication internationale: WO 2013/150088

(56) Documents cités:
- EP-A2- 0 904 958
- WO-A1-2010/115860
- JP-A- 62 244 702

## Description

L'invention se rapporte aux pneumatiques à carcasse radiale ou à carcasse croisé.

Les pneumatiques à carcasse radiale se sont progressivement imposés sur différents marchés, et notamment le marché des pneumatiques pour véhicules de tourisme. Ce succès est dû en particulier aux qualités d'endurance, de confort et de faible résistance au roulement de la technologie radiale.

Les principales parties d'un pneumatique sont la bande de roulement, les flancs et les bourrelets. Les bourrelets sont destinés à entrer en contact avec la jante. Dans un pneumatique de technologie radiale, chacune des principales parties constituant le pneumatique, à savoir la bande de roulement, les flancs et les bourrelets, a des fonctions bien séparées les unes des autres, et a par conséquent, une constitution spécifique bien connue.

Le pneumatique radial est essentiellement renforcé par une armature de carcasse comprenant au moins une nappe de carcasse présentant, sous la bande de roulement, un angle sensiblement égal à 90° par rapport à la direction circonférentielle du pneumatique. Cette armature de carcasse est surmontée radialement à l'extérieur, et sous la bande de roulement, de nappes de renfort formant une ceinture.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

On rappelle que la direction circonférentielle du pneumatique est la direction comprise dans un plan perpendiculaire à l'axe de rotation du pneumatique et tangente au renforcement de ceinture du pneumatique.

Suite à l'apparition de pneumatique à carcasse radiale, certains pneumatiques à carcasse croisée ont également été pourvus d'un renforcement de ceinture sous la bande de roulement.

Dans ces deux types de pneumatique, la bande de roulement, en contact directement avec le sol, a notamment pour fonction d'assurer le contact avec la route et doit s'adapter à la forme du sol. Les flancs, quant à eux, absorbent les irrégularités du sol tout en transmettant les efforts mécaniques nécessaires pour porter la charge du véhicule et assurer son mouvement.

Le renforcement de ceinture est une armature qui doit, d'une part, être suffisamment rigide vis-à-vis des déformations sur chant afin que le pneumatique développe les poussées de dérive nécessaires à son guidage, et transmettre le couple moteur ou freineur, et d'autre part, être très souple en flexion, c'est-à-dire autoriser des variations de courbure de son plan pour assurer une surface de contact du pneumatique sur le sol suffisante.

Par conséquent, le renforcement de ceinture a généralement une structure composite, lui permettant de présenter la rigidité requise pour un poids relativement faible. Le renforcement de ceinture est généralement constitué d'au moins deux nappes présentant des angles différents, comprenant des renforts, en forme de câble, enrobés de caoutchouc. Les éléments de renfort sont croisés d'une nappe à l'autre par rapport à la direction circonférentielle et sont symétriques ou non par rapport à cette direction.

On dénomme ci-après par :
- « direction longitudinale » : direction de roulement du pneumatique,
- « radialement intérieur à » : signifie sur une droite perpendiculaire à l'axe de rotation du pneumatique, plus proche de l'axe de rotation,
- radialement extérieur à » : signifie sur une droite perpendiculaire à l'axe de rotation du pneumatique, plus éloigné de l'axe de rotation,
- « plan équatorial ou plan médian » : plan perpendiculaire à l'axe de rotation du pneumatique et qui divise le pneumatique en deux moitiés sensiblement égales,
- « direction transversale du pneumatique » : direction parallèle à l'axe de rotation,
- « plan radial » : un plan qui contient l'axe de rotation du pneumatique,
- « coupe méridienne » : coupe contenant l'axe de rotation.

Il est déjà connu de la demande WO 2010/115860 A1 un pneumatique pour véhicule de tourisme comprenant les trois éléments distincts suivants :
- une armature de carcasse radiale formée de renforts allant d'un bourrelet à l'autre du pneumatique,
- une ceinture de sommet qui consiste essentiellement en :
   o des renforts parallèles à la direction circonférentielle du pneumatique destiné à assurer le frettage, et
   o une couche de rigidification qui consiste essentiellement en des renforts de type polymère thermoplastique, sous forme de bandelettes enrobées d'une gomme, les bandelettes formant un angle compris entre 10° et 80° avec la direction circonférentielle du pneumatique.
Les bandelettes sont définies comme, vues en section, présentant une largeur au moins égale à 5 fois leur épaisseur maximale.

Ce pneumatique présente notamment l'intérêt d'être plus léger que les pneumatiques de l'art antérieur tout en conservant une très bonne rigidité de dérive.

On rappelle que la rigidité de dérive d'un pneumatique a une influence déterminante sur l'équilibre transversal du véhicule. Plus la rigidité de dérive est importante, plus grande sera la poussée de dérive à angle de dérive donné. Pour rappel, l'angle de dérive se définit par l'angle du plan de roue par rapport à la trajectoire du pneumatique.

Ainsi la nature et l'emplacement des constituants du renforcement de ceinture sont des paramètres déterminants de la rigidité de dérive, et donc ont une influence déterminante sur la poussée de dérive du pneumatique. Or dans cette demande de brevet WO 2010/115860 A1 antérieure, est proposée une conception originale quant à la nature et l'agencement des composants du renforcement de ceinture, qui permet l'allègement du pneumatique tout en conservant de bons résultats de poussée de dérive.

Un objectif de la présente invention est de pouvoir garantir des résultats de rigidité de dérive similaires à ceux obtenus avec une architecture du renforcement de ceinture telle que divulguée dans la demande WO 2010/115860 A1, tout en améliorant encore le compromis global de performance d'un tel pneumatique.

En effet, la mise au point de ce type d'architecture, selon ce document antérieur, oblige à maîtriser de nombreux paramètres physico-chimiques qui interagissent entre eux. Or vu la nature et l'agencement radialement différent de la couche de rigidification, l'homme du métier ne peut pas transposer les règles de conception d'architectures plus usuelles utilisant des câbles de renfort.

En outre, étant donné la nature et la géométrie générale radicalement différentes de la couche de rigidification, tous les positionnements relatifs de tous les éléments de l'armature de sommet doivent être redéfinis.

Les inventeurs ont constaté le développement de cisaillements très différents principalement au niveau des bordures des nappes notamment de par l'utilisation de renforts circonférentiels dans les bordures en coopération avec une seule couche de rigidification.

En effet, les gommes et les câbles doivent supporter des efforts considérables localement.

Il est connu du document EP 0 756 948 A2 un pneumatique comprenant une zone sommet ; ladite zone sommet comprenant une nappe de frettage et une nappe de renfort séparées par au moins une couche de gomme de liaison disposées entre au moins deux nappes successives radialement, et à chaque extrémité axiale de la zone sommet. Mais ce document ne donne aucune précision sur les largeurs de chaque nappe.

Le document DE 2005 049184 A1 décrit aussi un pneumatique comprenant une zone sommet qui comprend notamment une nappe renfort et une nappe de frettage séparées par au moins une gomme de rembourrage insérées à chaque extrémité axiale de la zone sommet, et entre au moins deux nappes successives radialement. La nappe de frettage peut être disposée variablement selon l'axe radial. Aucune indication n'est fournie par ce document sur les largeurs des nappes.

L'invention a donc pour objet un pneumatique comportant au moins une armature de carcasse radialement intérieure à un renforcement de ceinture comprenant une première et une seconde extrémités, ledit renforcement de ceinture étant radialement intérieur à une bande de roulement, et comprenant les éléments distincts suivants:
- une nappe renfort, ayant une demi-largeur axiale L2, comprenant une couche en polymère de renforcement disposée entre deux couches de gomme d'enrobage, ladite couche de polymère se présentant sous forme de bandelettes,
- au moins une nappe de frettage, ayant une demi-largeur axiale L1, et comprenant des éléments de renforcement filaires, deux à deux parallèles, formant au plus un angle égale à 7° par rapport à la direction circonférentielle du pneumatique, ladite au moins nappe de frettage surmontant la nappe de renfort.

Ce pneumatique comprend au moins une couche de gomme de découplage de bordure, disposée au moins radialement entre la nappe de frettage et la nappe de renfort et disposée à au moins une extrémité transversale du renforcement de ceinture, ladite couche de gomme de découplage de bordure ayant une longueur totale comprise entre 10 et 40mm et une épaisseur comprise entre 0,2 et 1,2mm. Ce pneumatique se caractérise en ce qu'il comprend au moins une nappe de renfort, et en ce qu'à au moins une extrémité du renforcement de ceinture, les demi-largeurs L1 et L2 sont différentes, et présentent une différence (L1 - L2) comprise entre 5 et 10mm.

La nappe de renfort forme un angle compris entre +/-20° et +/-50° par rapport à la direction circonférentielle du pneumatique. Lorsque le pneumatique comprend au moins deux nappes de renfort, ces dernières peuvent être chacune disposées selon un angle compris entre +/-20° et +/-50°, excepté 0°, par rapport à la direction circonférentielle, et l'une par rapport à l'autre, avec toutes les combinaisons d'angles possibles.

L'épaisseur de cette gomme de découplage de bordure peut être uniforme ou non sur toute sa largeur.

Le pneumatique selon l'invention présente l'avantage de maintenir un fonctionnement local homogène de chaque élément constitutif du renforcement de ceinture, l'un par rapport l'autre, notamment en bordure de nappe, par un contrôle, voire une diminution, des mouvements de cisaillement.

De préférence, la gomme de découplage de bordure présente un module sécant en extension à 10% d'allongement compris entre 3 et 70MPa, ladite couche de gomme étant préférentiellement disposée à chacune des extrémités transversales du renforcement de ceinture.

La couche de gomme de découplage de bordure est de préférence disposée à chacune des extrémités transversales du renforcement de ceinture, entre la nappe de renfort et la nappe de frettage, ou bien, à la fois en-dessous et au-dessus de la nappe de renfort de façon à former un retournement autour de la nappe de renfort, ou bien encore, à la fois entre la nappe de renfort et la nappe de frettage, à au moins une extrémité transversale du renforcement de ceinture, et en-dessous et au-dessus de la nappe de renfort à une autre extrémité du renforcement de ceinture.

Dans un mode de réalisation préféré, chaque couche de gomme d'enrobage de la couche de renforcement peut comprendre un caoutchouc diénique. Chaque couche de gomme d'enrobage de la couche de renforcement est de préférence en polymère et plus préférentiellement en polymère thermoplastique. Chaque couche de gomme d'enrobage de la couche de renforcement peut comprendre au moins un plastifiant liquide, éventuellement combiné à au moins une résine tackifiante.

Dans une variante de réalisation avantageuse, chaque couche de gomme d'enrobage de la couche de renforcement en polymère peut présenter un module sécant en extension, à 10% en allongement, noté Ms, supérieur à 30MPa, de préférence compris entre 40 et 120MPa.

Chaque couche de gomme d'enrobage de la couche en polymère de renforcement est de préférence à base d'un caoutchouc diénique choisi dans le groupe constitué par les polybutadiènes, le caoutchouc naturel, les polyisoprènes de synthèse, les différents copolymères de butadiène, les différents copolymères d'isoprène, et les mélanges de ces élastomères.

Le polymère de ladite couche de polymère de renforcement est avantageusement étiré multiaxialement.

Les bandelettes de la couche de polymère thermoplastique peuvent présenter une section rectangulaire, et être disposées sensiblement parallèles deux à deux, lesdites bandelettes étant disposées de préférence entre deux couches de gomme d'enrobage. Les bandelettes peuvent être assemblées les unes aux autres à l'aide de moyen de fixation souples qui leur permettent de pivoter l'une par rapport à l'autre.

Les bandelettes de renforcement présentent de préférence une largeur au moins égale à 5 fois leur épaisseur maximale, et plus préférentiellement au moins égale à 20 fois leur épaisseur maximale. Les bandelettes de renforcement peuvent présenter un module de traction supérieur ou égale à 500MPa.

La couche de polymère thermoplastique peut former un film présentant, quelle que soit la direction de traction considérée dans le plan du film, un module d'Young E qui est supérieur à 1000MPa, de préférence supérieur à 2000MPa.

Les éléments de renforcement filaires circonférentiels peuvent comprendre au choix de l'acier, du textile, de la fibre de carbone, de la fibre de verre, un polymère thermoplastique et leur combinaison.

Le polymère thermoplastique est de préférence du polymère thermoplastique PET.

Le textile est de préférence choisi parmi le polyester, l'aramide, le nylon, la rayonne ou leur combinaison.

Le pneumatique peut comprendre au moins une gomme électriquement conductrice disposée entre le renforcement de ceinture et la bande de roulement. Cette couche peut également avoir un rôle supplémentaire d'antiperforation.

L'invention va maintenant être décrite à l'aide des exemples et des dessins qui suivent et dans lesquels :
- la figure 1 représente une vue schématisée montrant l'architecture d'un pneumatique selon l'état de la technique,
- la figure 2 représente une vue schématisée montrant un pneumatique en coupe selon le plan radial,
- la figure 3 représente une vue schématisée agrandie de l'extrémité transversale située à gauche de l'axe AA' et représentant le renforcement de ceinture d'un pneumatique selon un premier mode de réalisation, et
- la figure 4 représente une vue schématisée de l'extrémité transversale située à droite de l'axe AA' et représentant le renforcement de ceinture d'un pneumatique selon un second mode de réalisation.

Sur les différentes figures, les éléments techniques identiques ou similaires portent la même référence. Leur description n'est pas inutilement répétée pour ne pas alourdir le texte.

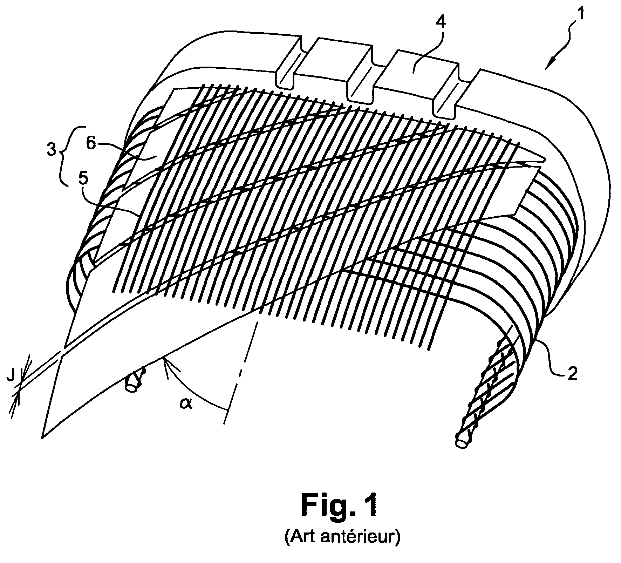

Comme le montre la figure 1 (état de la technique), le pneumatique radial pour véhicule de tourisme de référence générale 1, selon l'état de la technique, comprend une armature de carcasse 2 radialement intérieure à un renforcement de ceinture de référence générale 3, ledit renforcement de ceinture 3 étant radialement intérieur à une bande de roulement 4. Sur la figure 1, le renforcement de ceinture 3 comprend une nappe de frettage 5 et une nappe de renfort 6. Sur la figure 1, la nappe de frettage 5 est radialement extérieure à la nappe de renfort 6.

La nappe de frettage 5 est le plus souvent constituée d'éléments de renforcements filaires, deux à deux parallèles. Ces renforts sont généralement des câbles textiles (par exemple en nylon, rayonne, polyester, aramide) ou des câbles hybrides (par exemple aramide-nylon). En pratique, du fait de leur enroulement hélicoïdal, les renforts de la nappe de frettage 5 ne sont pas strictement parallèles à la direction circonférentielle, mais forment un angle avec cette direction, au plus égale à 7 degrés.

La nappe de renfort 6 est constituée d'une couche en polymère, de préférence, thermoplastique, par exemple du polyéthylène téréphtalate (PET), elle-même disposée entre deux couches de gomme d'enrobage.

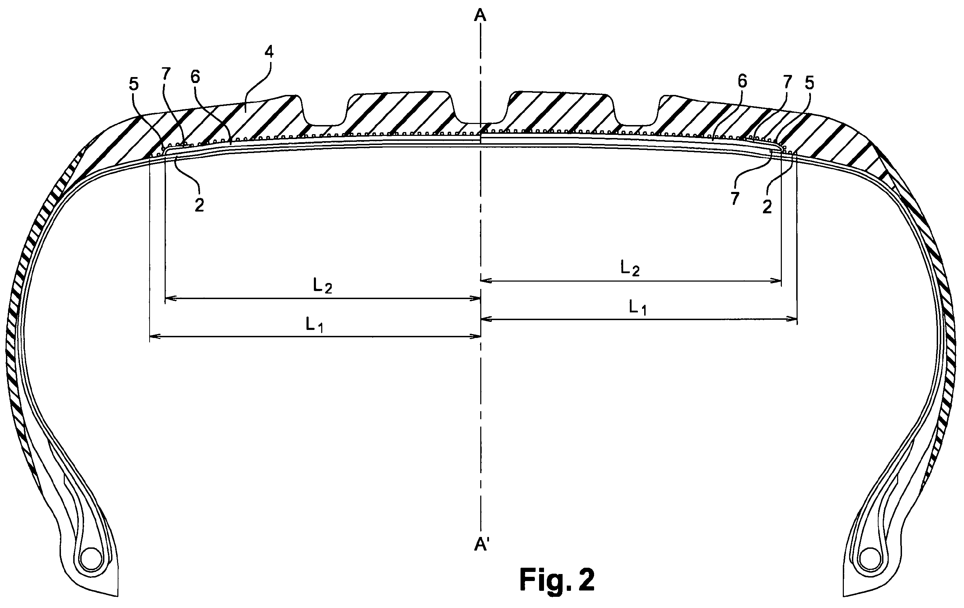

Comme le montre la figure 2, le pneumatique de l'invention représente deux modes de réalisation du renforcement de ceinture selon l'invention de part et d'autre de l'axe AA'. Selon ces deux modes de réalisation, le renforcement de ceinture comprend une nappe de renfort 6, disposée radialement vers l'extérieur de l'armature de carcasse 2, et radialement vers l'intérieur de la nappe de frettage 5.

Sur ces deux modes de réalisation, une couche de gomme de découplage de bordure 7 est disposée axialement entre la nappe de renfort 6 et la nappe de frettage 5. Cette couche de gomme de découplage de bordure 7 présente un module sécant en extension à 10% d'allongement de 16MPa.

La nappe de frettage 5 présente une demi-largeur L1, et la nappe de renfort 6 une demi-largeur L2. La demi-longueur L1 est supérieure à la demi-longueur L2. La différence (L1-L2) est d'environ 6mm.

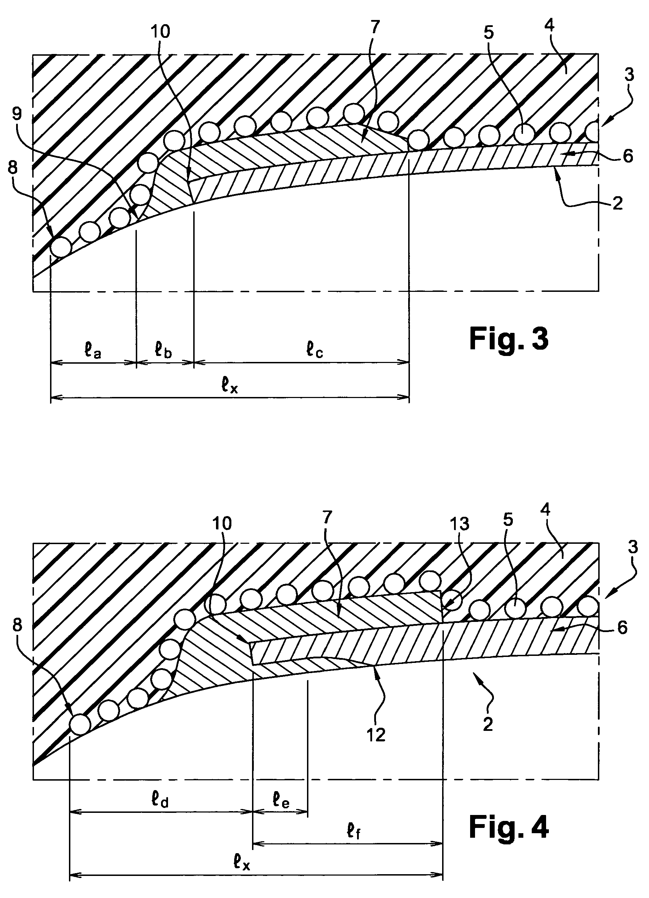

Comme le montre la figure 3 de manière plus détaillée, la couche de nappe de renfort 6 est disposée radialement à l'extérieur de l'armature de carcasse 2. La couche de gomme de découplage de bordure 7 est disposée axialement entre la nappe de renfort 6 et la nappe de frettage 5. Cette couche de gomme de découplage de bordure 7 présente un module sécant en extension à 10% d'allongement de 16MPa. La longueur totale (l_{b}+l_{c}) de cette gomme 7 dans la direction transversale est d'environ 15mm, et son épaisseur (c'est-à-dire sa dimension dans une direction sensiblement radiale), sensiblement uniforme sur sa longueur, est d'environ 0,4mm.

La longueur lₓ comprend la gomme de découplage de bordure 7 et une partie de la nappe de frettage 5. Elle est sous-divisée en trois sous-longueurs lₐ, l_{b} et l_{c}. La sous-longueur lₐ est située entre l'extrémité transversale extérieure 8 de la nappe de frettage 5 et l'extrémité transversale extérieure 9 de la gomme de découplage de bordure 7. La sous-longueur l_{b} est située entre l'extrémité extérieure 9 de la gomme de découplage de bordure 7 et l'extrémité extérieure 10 de la nappe de renfort 6. Enfin la sous-longueur l_{c} est située entre l'extrémité extérieure 10 de la nappe de renfort 6 et l'extrémité intérieure 11 de la gomme de découplage de bordure 7.

La sous-longueur lₐ est comprise entre environ 2 et 5mm, la sous-longueur l_{b} est comprise entre 5 et 10mm et la sous-longueur l_{c} est compris entre 5 et 15mm, et est de 10mm.

Les sous-longueurs lₐ, l_{b} et l_{c} peuvent être identiques ou différentes.

Selon différentes variantes de réalisation de ce premier mode de réalisation, le renforcement de ceinture 3 comprend au moins une nappe de renfort 6 et une seule nappe de frettage 5. Chacune de ces nappes pouvant être disposées radialement de manière alternée, et selon toutes les combinaisons d'arrangement possibles avec la condition que la nappe de frettage 5 est toujours radialement extérieure à la nappe de renfort 6.

Dans le mode de réalisation comprenant une nappe de frettage 5 et plusieurs nappes de renfort 6, une couche 7 de gomme de découplage de bordure peut être disposée entre chaque nappe 5, 6 ou seulement certaines des nappes de renfort 6. Cette gomme de découplage de bordure 7 peut également présenter des longueurs totales différentes selon son emplacement entre les nappes de renfort 6 et la nappe de frettage 5.

La figure 4 se distingue de la figure 3 par le fait que la gomme de découplage de bordure 7 est disposée à la fois en-dessous et au-dessus de la nappe de renfort 6 pour l'entourer, de manière à former un retournement autour de cette nappe 6.

Lorsque le retournement n'est présent qu'à une seule extrémité axiale du renforcement de ceinture 3, il est de préférence présent sur l'extrémité qui sera dirigée vers l'extérieure du véhicule une fois le pneumatique monté sur jante.

Ce retournement peut être présent à une seule extrémité transversale ou aux deux extrémités transversales du renforcement de ceinture 3.

De préférence la gomme de découplage de bordure enrobe la nappe de renfort 6.

Selon le mode de réalisation de la figure 4, la gomme de découplage de bordure 7 présente une longueur totale lx. Cette longueur totale se décompose en trois sous-longueur l_{d}, le et l_{f}.

La sous-longueur l_{d} est située entre l'extrémité transversale extérieure 8 de la nappe de frettage 5 et l'extrémité extérieure 10 de la nappe de renfort 6.

La sous-longueur le est située entre l'extrémité extérieure 10 de la nappe de renfort 6 et l'extrémité 12 de la partie radialement intérieure de la gomme de découplage de bordure 7.

La sous-longueur I_{f} est située entre l'extrémité extérieure 10 de la nappe de renfort 6 et l'extrémité 13 de la partie radialement extérieure de la gomme de découplage de bordure 7. Les sous-longueurs le et I_{f} peuvent être identiques ou différentes.

La sous-longueur l_{d} est comprise entre environ 4 et 12 mm, la sous-longueur le est comprise entre environ 5 et 20 .mm et la sous-longueur I_{f} est comprise entre environ 5 et 20 mm.

Le retournement de la gomme de découplage de bordure 7 autour de la nappe de renfort 6, représenté sur la figure 4, est disposé de telle manière qu'il englobe l'extrémité 10 de la nappe de renfort 6.

### 1 - Le polymère de la nappe de renfort

Le polymère est de préférence un polymère thermoplastique, et constitue la nappe de renfort 6 en étant étiré multiaxialement. Il se présente sous la forme de bandelettes présentant une section rectangulaire. Les films étirés multiaxialement sont bien connus pour être utilisés essentiellement à ce jour dans l'industrie de l'emballage, de l'alimentaire, dans le domaine électrique ou encore en tant que support de revêtements magnétiques.

Le polymère utilisé selon l'invention est celui décrit dans la demande WO2010/115860 A1 notamment de la page 8 paragraphe 39 à la page 12 paragraphe 62 inclus.

### 2 - La gomme d'enrobage de la couche de polymère de la nappe de renfort

La gomme d'enrobage qui enrobe chaque couche de polymère de la nappe de renfort 6, peut également enrober les éléments de renforcements filaires de la nappe de frettage 5.

De préférence, cette gomme d'enrobage est un caoutchouc diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus tels que acide stéarique, oxyde de zinc, dérivés guanidiques, des retardateurs ou des agents antiréversion.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC"), 1-phényl-2,4-dithiobiuret ("DTB"), dibutylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIX") et les mélanges de ces composés.

Parmi les retardateurs de vulcanisation, on citera par exemple le N-cyclohexylthiophtalimide (en abrégé « CTP ») commercialisé sous la dénomination « Vulkalent G » par la société Lanxess, le N-(trichlorométhylthio)benzène-sulfonamide commercialisé sous dénomination «Vulkalent E/C » par Lanxess, ou encore l'anhydride phtalique commercialisé sous dénomination « Vulkalent B/C » par Lanxess.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m²/g, de préférence de 30 à 400 m²/g_{.}

L'homme de l'art saura, à la lumière de la présente description, ajuster la formulation de la composition de caoutchouc afin d'atteindre les niveaux de propriétés (notamment module Ms) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

Des compositions de caoutchouc à très haut module utilisables dans le cadre de la présente invention, jusqu'ici normalement réservées à des zones des pneumatiques plus rigides que celles de la ceinture, en particulier aux bourrelets de ces pneumatiques, ont par exemple été décrites dans les documents brevet WO 2005/113259 (ou US 8 033 311) et WO 2005/113887 (ou US 2008/0318077), ainsi que leur formulations détaillées.

Le soufre est utilisé à un taux préférentiel compris entre 2 et 15 pce (parties en poids pour cent parties d'élastomère), plus préférentiellement entre 3 et 12 pce. L'accélérateur primaire de vulcanisation, par exemple un sulfénamide, est utilisé à un taux préférentiel compris entre 0,5 et 10 pce. Le retardateur de vulcanisation, s'il est présent, est utilisé à un taux préférentiel compris entre 0,1 et 2 pce.

Le taux de charge renforçante, par exemple noir de carbone et/ou charge inorganique telle que silice, est de préférence supérieur à 50 pce, par exemple compris entre 60 et 140 pce ; il est plus préférentiellement encore supérieur à 70 pce, notamment compris entre 70 et 120 pce.

Dans les cas des plus fortes rigidités, la composition de caoutchouc pourra avantageusement comporter également une résine renforçante additionnelle constituée par exemple d'un accepteur de méthylène tel qu'une résine formophénolique, à un taux préférentiel compris entre 5 et 30 pce, plus préférentiellement entre 10 et 25 pce, et un donneur de méthylène tel que HMT ou H3M, à un taux préférentiel compris entre 2 et 20 pce, plus préférentiellement entre 5 et 15 pce.

Selon un autre mode de réalisation préférentiel, chaque couche de composition de caoutchouc comporte plus de 5 pce, de préférence entre 5 et 30 pce, d'un agent plastifiant, préférentiellement sous forme liquide à température ambiante (20°C), destiné à améliorer la processabilité (mise en oeuvre) des compositions de caoutchouc à l'état cru.

A titre d'exemples, toute huile d'extension, qu'elle soit de nature aromatique ou non-aromatique, tout agent plastifiant connu pour ses propriétés plastifiantes vis-à-vis d'élastomères diéniques, est utilisable..

Conviennent particulièrement les plastifiants liquides choisis dans le groupe constitué par les huiles naphténiques (à basse ou haute viscosité, notamment hydrogénées ou non), les huiles paraffiniques, les huiles MES *(Medium Extracted Solvates),* les huiles DAE *(Distillate Aromatic Extracts*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés.

Selon un autre mode de réalisation préférentiel, chaque couche de composition de caoutchouc comporte plus de 3 pce, de préférence entre 3 et 15 pce, d'une résine tackifiante (pour rappel, une résine apte à donner du "tack" c'est-à-dire un collant immédiat par légère pression sur un support), destinée à améliorer le collant à l'état cru des compositions de caoutchouc et le processus de calandrage lors de la fabrication du stratifié multicouche de l'invention.

De manière bien connue de l'homme du métier, la dénomination "résine" est réservée à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné.

Ces résines tackifiantes sont des polymères bien connus de l'homme du métier, elles peuvent être aliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titres d'exemples de telles résines tackifiantes, on peut notamment citer celles choisies dans le groupe constitué par les colophanes et leurs dérivés, les résines coumarone, les résines phénoliques, les résines terpéniques (alpha-pinène, beta-pinène, ou limonène), les résines terpène-phénol, les résines de coupe C5 et/ou coupe C9, les résines de cyclopentadiène et/ou dicyclopentadiène, les résines alpha-méthyl-styrène et les mélanges de telles résines.

Selon un mode de réalisation préférentiel de l'invention, la résine tackifiante utilisée présente au moins une quelconque, plus préférentiellement l'ensemble des caractéristiques suivantes :
- une Tg supérieure à 25°C, en particulier compris entre 30°C et 100°C (mesurée par DSC selon norme ASTM D3418) ;
- un point de ramollissement supérieur à 50°C, en particulier compris entre 50°C et 150°C (mesuré par exemple selon la norme ISO 4625 - méthode « Ring and Ball ») ;
- une masse moléculaire moyenne en nombre (Mn) comprise entre 400 et 2000 g/mol, en particulier entre 500 et 1500 g/mol (mesurée par exemple par SEC (chromatographie d'exclusion stérique) avec étalons de polystyrène).

Préférentiellement, le module Ms de chaque composition de caoutchouc est supérieur à 40 MPa, notamment compris entre 40 et 120 MPa ; plus préférentiellement encore, il est supérieur à 50 MPa, notamment compris entre 50 et 100 MPa.

Les mesures de module Ms sont effectuées en traction, sauf indication différente selon la norme ASTM D 412 de 1998 (éprouvette "C") (bien entendu, sur une éprouvette de composition de caoutchouc à l'état réticulé, c'est-à-dire cuit, vulcanisé, pour ce qui concerne les compositions préférentielles du type réticulables) : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le stratifié multicouche de l'invention, l'épaisseur e₂ de chaque couche de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un bandage pneumatique.

De préférence, notamment lors d'une utilisation du stratifié multicouche comme structure de protection ou renforcement d'une ceinture de pneumatique, le stratifié multicouche de l'invention présente une largeur et une longueur qui sont respectivement supérieures à 2,5 mm et à 10 cm, plus préférentiellement respectivement supérieures à 5 mm et à 20 cm.

Le film de polymère peut être utilisé tel quel, c'est-à-dire tel que disponible commercialement, ou bien redécoupé à façon sous forme de bandes ou bandelettes étroites dont la largeur peut varier dans une très large mesure selon les applications visées.

Selon un mode de réalisation préférentiel, dans le stratifié multicouche de l'invention, le film de polymère est pourvu d'une couche adhésive au regard de chaque couche de composition de caoutchouc avec laquelle il est au contact. Bien entendu, l'invention s'applique également aux cas où aucune couche adhésive n'est utilisée, le film de polymère lui-même et/ou chaque couche de composition de caoutchouc pouvant posséder une propriété auto-adhésive due à leur formulation propre.

Pour faire adhérer le caoutchouc au film de polymère, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester, en polyamide ou en aramide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 220°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle du film lors de son encollage.

L'homme du métier comprendra aisément que, dans le stratifié multicouche de l'invention, la connexion entre le film de polymère et chaque couche de caoutchouc avec laquelle il est au contact pourra être assurée définitivement lors de la cuisson (réticulation) finale de l'article fini en caoutchouc, notamment du pneumatique.

### 3 - La gomme de découplage de bordure

La gomme de découplage de bordure selon l'invention est une composition typique de caoutchouc naturel, de noir de carbone (55pce), d'antioxydant, d'un système de vulcanisation à base d'oxyde de zinc et d'acide stéarique, d'un système de vulcanisation à base de soufre (5pce), et d'additifs usuels de vulcanisation (module Ms égale à 16MPa).

La gomme de découplage de bordure selon l'invention peut également correspondre à la composition de la gomme de d'enrobage.

### Résultats endurance

Ces résultats sont obtenus par simulation numérique par méthode de calcul par éléments finis sur des gommes de découplage de bordure de module différents.

On modélise par cette méthode un pneumatique de dimension 205/55 R 16 selon l'invention et correspondant à la figure 3. L'épaisseur de la gomme de découplage de bordure est de 0,6mm, la largeur l_{b} mesure 5mm et la largeur l_{c} mesure 15,2mm.

On modélise également un pneumatique, de même dimension, selon l'état de la technique comprenant deux nappes sommets de travail faisant un angle égale à 25°, croisées l'une par rapport à l'autre, et une frette en nylon.

La largeur de la première nappe sommet de travail radialement extérieure correspond à la nappe de renfort 6 selon l'invention. La largeur de la seconde nappe sommet de travail, radialement intérieure, présente une largeur transversale supérieure de 7mm, de chaque côté, à la première nappe sommet de travail. Ce pneumatique, selon l'état de la technique, comprend également une gomme de découplage de bordure, disposée entre l'extrémité de la seconde nappe sommet de travail et la frette.

Dans le pneumatique selon l'invention et celui selon l'art antérieur, la gomme de découplage de bordure est modélisée par la loi de Mooney-Rivlin.

Selon ce modèle, on écrase sur sol glissant le pneumatique gonflé à 2,5bars, soumis à une charge de 4000Newton.

Pour cela, on réalise un maillage à deux dimensions de la coupe méridienne de chaque pneumatique, puis on extrude ce maillage autour de l'axe de rotation du pneumatique afin d'obtenir un tore. Les gommes de découplage de bordure sont maillées avec deux éléments dans l'épaisseur de 0,4mm et avec des longueurs d'environ 2mm suivant la largeur lx. Dans la direction circonférentielle, on a utilisé un pas angulaire de 0,5 degré dans la zone en contact avec le sol, et 1,25 degré dans la zone opposée.

On obtient ainsi 283584 noeuds pour la modélisation du pneumatique conforme à l'invention, 304128 noeuds pour le pneumatique de comparaison. La différence s'explique par la présence de deux nappes de travail dans le sommet du pneumatique de comparaison.

L'amplitude de cisaillement maximale est mesurée pour chaque maille de gomme de découplage de bordure avec 10% d'extension uniaxiale. On rappelle que le cisaillement maximum est défini comme la demi différence entre la valeur propre la plus grande et la valeur propre la plus petite du tenseur (déformations de Green-Lagrange).

Pour obtenir les valeurs d'amplitude de cisaillement, on détermine tout d'abord sur chaque couronne la maille ayant le cisaillement maximum. On évalue ensuite le plan associé puis, au tour de roue, le cisaillement dans ce plan associé. La couronne est constituée en prenant un élément du maillage à deux dimensions et tous les éléments extrudés à partir de celui-ci.

Les résultats calculés, pour différentes valeurs de module sécant en extension à 10% d'allongement, sont rassemblés dans le tableau I ci-après.

**Tableau I**

| | **Amplitude de cisaillement** | |
|---|---|---|
| **Module sécant en extension** | **Pneumatique de l'art antérieur** | **Pneumatique selon l'invention** |
| **4** | **0,137** | **0,356** |
| **8** | **0,082** | **0,237** |
| **16** | | **0,144** |
| **40** | | **0,059** |
| **60** | | **0,035** |

Les résultats permettent de conclure qu'avec une gomme de découplage de bordure de faible module sécant en extension à 10% d'allongement, le pneumatique selon l'invention présente une amplitude de cisaillement de 2,6 (module sécant de 4), une amplitude de cisaillement de 2,9 (module sécant de 8), valeurs plus importantes que pour le pneumatique de comparaison.

Par ailleurs, avec une gomme de découplage de bordure de module sécant en extension 4 fois plus élevé, le pneumatique selon l'invention présente la même amplitude de cisaillement que le pneumatique de comparaison.

Par conséquent, l'utilisation selon l'invention d'une gomme de découplage de bordure de module sécant en extension élevé permet de conserver des qualités d'endurance, équivalentes à celles obtenues avec un pneumatique selon l'art antérieur. En effet, la présence d'une gomme de découplage selon l'invention permet de réduire le travail mécanique en extrémité de nappe de renfort, et donc de diminuer les décohésions locales des interfaces.

### Résultats résistance au roulement (RRt)

Ces résultats, rassemblés dans le tableau II, sont obtenus en montant les pneumatiques sur jante 5J14 et mis sous une pression de 2,4bars, puis mis à rouler à 90km/h.

Le pneumatique 1 est un pneumatique selon l'invention qui comprend une seule couche de nappe de renfort.

Les pneumatiques 2 à 4 sont des pneumatiques selon l'invention qui comprennent deux nappes de renfort.

**Tableau II**

| | **Témoin** | **Pneu 1** | **Pneu 2** | **Pneu 3** | **Pneu 4** |
|---|---|---|---|---|---|
| **RRt en kg/t** | 8.95 | 8.62 | 8.93 | 8.95 | 8.88 |

Comme le montre le tableau II, les pneumatiques selon l'invention présentent de meilleurs résultats que celui du témoin (RRt plus faible) voire tout aussi bons (RRt égale).

### Rigidité de dérive

Ces résultats, rassemblés dans le tableau III, sont obtenus en mesurant le niveau de poussée de dérive obtenu pour un pneumatique soumis 1° de dérive. Les pneumatiques sont montés sur jante 5J14 et mis sous une pression de 2, 4bars, puis mis à rouler à 80km/h, et soumis à une charge de 4950N.

Les pneumatiques 1 à 5 sont des pneumatiques selon l'invention qui comprennent deux nappes de renfort.

**Tableau III**

| | **Témoin** | **Pneu 1** | **Pneu 2** | **Pneu 3** | **Pneu 4** | **Pneu 5** |
|---|---|---|---|---|---|---|
| **D(z) en N/°** | 1128 | 1126 | 1166 | 1215 | 1180 | 1230 |
| **Ecart en**% | 0 | 0 | 3 | 8 | 5 | 9 |

Comme le montre le tableau III, la dispersion de mesure étant de l'ordre de 3% , les pneumatiques selon l'invention présentent d'aussi bons résultats (Pneu 1) que le témoin, voire meilleurs (Pneus 2 à 5).

## Revendications

1. Pneumatique comportant au moins une armature de carcasse (2) radialement intérieure à un renforcement de ceinture (3) comprenant une première et une seconde extrémités transversales, ledit renforcement de ceinture (3) étant radialement intérieur à une bande de roulement (4), ledit renforcement de ceinture (3) comprenant les éléments distincts suivants:
- une nappe de renfort (6), ayant une demi-largeur transversale L2, comprenant une couche de renforcement en polymère disposée entre deux couches de gomme d'enrobage, ladite couche de polymère se présentant sous forme de bandelettes,
- au moins une nappe de frettage (5), ayant une demi-largeur transversale L1, et comprenant des éléments de renforcement filaires, deux à deux parallèles, formant au plus un angle au plus égale à 7° par rapport à la direction circonférentielle du pneumatique, ladite au moins nappe de frettage surmontant la nappe de renfort, **caractérisé en ce que**
le pneumatique comprend au moins une couche de gomme de découplage de bordure (7), disposée au moins radialement entre la nappe de frettage (5) et la nappe de renfort (6) et disposée à au moins une extrémité transversale du renforcement de ceinture, ladite couche de gomme de découplage de bordure (7) ayant une longueur totale comprise entre 10 et 40mm et une épaisseur comprise entre 0,2 et 1,2mm, **en ce qu'** il comprend au moins une nappe de renfort, **et en ce qu**'à au moins une extrémité du renforcement de ceinture (3), les demi-largeurs L1 et L2 sont différentes, et présentent une différence (L1 - L2) comprise entre 5 et 10mm.

2. Pneumatique selon la revendication 1, **caractérisé en ce que** la gomme de découplage de bordure (7) présente un module sécant en extension à 10% d'allongement compris entre 3 et 70MPa.

3. Pneumatique selon la revendication 1, **caractérisé en ce qu'**une couche de gomme de découplage de bordure (7) est disposée à chacune des extrémités transversales du renforcement de ceinture (3).

4. Pneumatique selon la revendication 1, **caractérisé en ce que** la couche de gomme de découplage de bordure (7) est disposée radialement, à au moins une première extrémité transversale du renforcement de ceinture (3), à la fois en-dessous et au-dessus de la nappe de renfort de façon à former un retournement autour de la nappe de renfort (6).

5. Pneumatique selon la revendication 4, **caractérisé en ce que** la couche de gomme de découplage de bordure (7) est disposée à la fois en dessous et au-dessus de la nappe de renfort de façon à former un retournement de la nappe de renfort (6) à la seconde extrémité transversale du renforcement de ceinture (3).

6. Pneumatique selon l'une des revendications précédentes, **caractérisé en ce que** chaque couche de gomme d'enrobage de la couche de renforcement est un caoutchouc diénique.

7. Pneumatique selon l'une des revendications précédentes, **caractérisé en ce que** chaque couche de gomme d'enrobage de la couche de renforcement en polymère est en polymère thermoplastique.

8. Pneumatique selon l'une des revendications précédentes, **caractérisé en ce que** chaque couche de gomme d'enrobage de la couche de renforcement en polymère comprend au moins un plastifiant liquide.

9. Pneumatique selon l'une des revendications précédentes, **caractérisé en ce que** chaque couche de gomme d'enrobage de la couche de renforcement en polymère comprend au moins une résine tackifiante.

10. Pneumatique selon l'une des revendications précédentes, **caractérisé en ce que** chaque couche de gomme d'enrobage de la couche de renforcement en polymère a un module sécant en extension, à 10% en allongement, noté Ms, supérieur à 30MPa, de préférence compris entre 40 et 120MPa.

11. Pneumatique selon l'une des revendications précédentes, **caractérisé en ce que** chaque couche de gomme d'enrobage de la couche de renforcement en polymère est à base d'un caoutchouc diénique choisi dans le groupe constitué par les polybutadiènes, le caoutchouc naturel, les polyisoprènes de synthèse, les différents copolymères de butadiène, les différents copolymères d'isoprène, et les mélanges de ces élastomères.

12. Pneumatique selon l'une des revendications précédentes, **caractérisé en ce que** le polymère de ladite couche de polymère de renforcement est étiré multiaxialement.

13. Pneumatique selon l'une des revendications précédentes, **caractérisé en ce que** les bandelettes de renforcement présentent une largeur au moins égale à 5 fois leur épaisseur maximale, et de préférence au moins égale à 20 fois leur épaisseur maximale.

14. Pneumatique selon l'une des revendications précédentes, **caractérisé en ce que** les bandelettes de renforcement présentent un module de traction supérieur ou égale à 500MPa.

15. Pneumatique selon l'une des revendications précédentes, **caractérisé en ce que** la couche de polymère forme un film présentant, quelle que soit la direction de traction considérée dans le plan du film, un module d'Young E qui est supérieur à 1000MPa, de préférence supérieur à 2000MPa.

16. Pneumatique selon l'une des revendications précédentes, **caractérisé en ce que** le polymère est du polymère thermoplastique PET.

17. Pneumatique selon l'une des revendications précédentes, **caractérisé en ce que** les éléments de renforcement filaires sont à base d'une matière choisie dans au moins un élément du groupe constitué par l'acier, le textile, la fibre de carbone, la fibre de verre, le polymère thermoplastique.

18. Pneumatique selon la revendication 17, **caractérisé en ce que** le textile est choisi dans au moins un élément du groupe constitué par le polyester, l'aramide, le nylon, la rayonne.

19. Pneumatique selon l'une des revendications précédentes, **caractérisé en ce qu'**il comprend au moins une gomme électriquement conductrice disposée entre le renforcement de ceinture et la bande de roulement.

## Patentansprüche

1. Luftreifen, der mindestens eine Karkassenbewehrung (2) radial innen bezüglich einer Gürtelverstärkung (3) aufweist, die ein erstes und ein zweites Querende enthält, wobei die Gürtelverstärkung (3) radial innen bezüglich eines Laufstreifens (4) liegt, wobei die Gürtelverstärkung (3) die folgenden unterschiedlichen Elemente enthält:
- eine Verstärkungslage (6) mit einer Querhalbbreite L2, die eine Polymer-Verstärkungsschicht zwischen zwei Schichten aus Ummantelungsgummi angeordnet enthält, wobei die Polymerschicht in Form von Bändchen vorliegt,
- mindestens eine Bandagierungslage (5) mit einer Querhalbbreite L1, und die drahtförmige Verstärkungselemente paarweise parallel enthält, die höchstens einen Winkel höchstens gleich 7° bezüglich der Umfangsrichtung des Luftreifens formen, wobei die mindestens Bandagierungslage über der Verstärkungslage liegt,
**dadurch gekennzeichnet, dass**
der Luftreifen mindestens eine Randentkopplungsgummischicht (7) enthält, die zumindest radial zwischen der Bandagierungslage (5) und der Verstärkungslage (6) und an mindestens einem Querende der Gürtelverstärkung angeordnet ist, wobei die Randentkopplungsgummischicht (7) eine Gesamtlänge zwischen 10 und 40 mm und eine Dicke zwischen 0,2 und 1,2 mm hat, dass er mindestens eine Verstärkungslage enthält, und dass an mindestens einem Ende der Gürtelverstärkung (3) die Halbbreiten L1 und L2 unterschiedlich sind und einen Unterschied (L1 - L2) zwischen 5 und 10 mm aufweisen.

2. Luftreifen nach Anspruch 1, **dadurch gekennzeichnet, dass** der Randentkopplungsgummi (7) einen Dehnungs-Sekantenmodul bei 10% Dehnung zwischen 3 und 70 MPa aufweist.

3. Luftreifen nach Anspruch 1, **dadurch gekennzeichnet, dass** eine Randentkopplungsgummischicht (7) an jedem der Querenden der Gürtelverstärkung (3) angeordnet ist.

4. Luftreifen nach Anspruch 1, **dadurch gekennzeichnet, dass** die Randentkopplungsgummischicht (7) radial an mindestens einem ersten Querende der Gürtelverstärkung (3) sowohl unter als auch über der Verstärkungslage angeordnet ist, um einen Umschlag um die Verstärkungslage (6) zu bilden.

5. Luftreifen nach Anspruch 4, **dadurch gekennzeichnet, dass** die Randentkopplungsgummischicht (7) sowohl unter als auch über der Verstärkungslage angeordnet ist, um einen Umschlag der Verstärkungslage (6) am zweiten Querende der Gürtelverstärkung (3) zu bilden.

6. Luftreifen nach einem der vorhergehenden Ansprüche, **dadurch gekennzeichnet, dass** jede Ummantelungsgummischicht der Verstärkungsschicht ein Dienkautschuk ist.

7. Luftreifen nach einem der vorhergehenden Ansprüche, **dadurch gekennzeichnet, dass** jede Ummantelungsgummischicht der Polymer-Verstärkungsschicht aus thermoplastischem Polymer ist.

8. Luftreifen nach einem der vorhergehenden Ansprüche, **dadurch gekennzeichnet, dass** jede Ummantelungsgummischicht der Polymer-Verstärkungsschicht mindestens einen flüssigen Weichmacher enthält.

9. Luftreifen nach einem der vorhergehenden Ansprüche, **dadurch gekennzeichnet, dass** jede Ummantelungsgummischicht der Polymer-Verstärkungsschicht mindestens ein klebrig machendes Harz enthält.

10. Luftreifen nach einem der vorhergehenden Ansprüche, **dadurch gekennzeichnet, dass** jede Ummantelungsgummischicht der Polymer-Verstärkungsschicht einen Dehnungs-Sekantenmodul bei 10% Dehnung, mit Ms bezeichnet, größer als 30 MPa hat, der vorzugsweise zwischen 40 und 120 MPa liegt.

11. Luftreifen nach einem der vorhergehenden Ansprüche, **dadurch gekennzeichnet, dass** jede Ummantelungsgummischicht der Polymer-Verstärkungsschicht auf der Basis eines Dienkautschuks ist, der aus der Gruppe ausgewählt wird, die von den Polybutadienen, dem natürlichen Kautschuk, den synthetischen Polyisoprenen, den verschiedenen Butadien-Copolymeren, den verschiedenen Isopren-Copolymeren, und den Mischungen dieser Elastomermaterialien gebildet wird.

12. Luftreifen nach einem der vorhergehenden Ansprüche, **dadurch gekennzeichnet, dass** das Polymer der Polymer-Verstärkungsschicht multiaxial gedehnt wird.

13. Luftreifen nach einem der vorhergehenden Ansprüche, **dadurch gekennzeichnet, dass** die Verstärkungsbändchen eine Breite mindestens gleich dem Fünffachen ihrer maximalen Dicke und vorzugsweise mindestens gleich dem Zwanzigfachen ihrer maximalen Dicke aufweisen.

14. Luftreifen nach einem der vorhergehenden Ansprüche, **dadurch gekennzeichnet, dass** die Verstärkungsbändchen einen Zugmodul größer als oder gleich 500 MPa aufweisen.

15. Luftreifen nach einem der vorhergehenden Ansprüche, **dadurch gekennzeichnet, dass** die Polymerschicht eine Folie bildet, die unabhängig von der in der Ebene der Folie betrachteten Zugrichtung einen Young-Modul E aufweist, der größer als 1000 MPa, vorzugsweise größer als 2000 MPa ist.

16. Luftreifen nach einem der vorhergehenden Ansprüche, **dadurch gekennzeichnet, dass** das Polymer thermoplastisches Polymer PET ist.

17. Luftreifen nach einem der vorhergehenden Ansprüche, **dadurch gekennzeichnet, dass** die Drahtverstärkungselemente auf der Basis eines Materials sind, das aus mindestens einem Element der Gruppe ausgewählt wird, die aus Stahl, Textilie, Kohlenstoffaser, Glasfaser, thermoplastischem Polymer besteht.

18. Luftreifen nach Anspruch 17, **dadurch gekennzeichnet, dass** die Textilie aus mindestens einem Element der Gruppe ausgewählt wird, die aus Polyester, Aramid, Nylon, Rayon besteht.

19. Luftreifen nach einem der vorhergehenden Ansprüche, **dadurch gekennzeichnet, dass** er mindestens einen elektrisch leitenden Gummi enthält, der zwischen der Gürtelverstärkung und dem Laufstreifen angeordnet ist.

## Claims

1. Tyre comprising at least one carcass reinforcement (2) radially inside a belt reinforcer (3) comprising a first and a second transverse end, the said belt reinforcer (3) being radially inside a tread (4), the said belt reinforcer (3) comprising the following distinct elements:
- a reinforcing ply (6), having a transverse half-width L2, comprising a polymer reinforcing layer positioned between two layers of coating rubber, the said polymer layer being in the form of strips,
- at least one hooping ply (5), having a transverse half-width L1, and comprising filamentary reinforcing elements, parallel two by two, forming at most an angle at most equal to 7° with respect to the circumferential direction of the tyre, the said at least one hooping ply surmounting the reinforcing ply, **characterized in that**
the tyre comprises at least one layer of edge uncoupling rubber (7), positioned at least radially between the hooping ply (5) and the reinforcing ply (6) and positioned at at least one transverse end of the belt reinforcer, the said layer of edge uncoupling rubber (7) having a total length comprised between 10 and 40 mm and a thickness comprised between 0.2 and 1.2 mm, **in that** it comprises at least one reinforcing ply, **and in that** at at least one end of the belt reinforcer (3), the half-widths L1 and L2 are different, and manifest a difference (L1 - L2) comprised between 5 and 10 mm.

2. Tyre according to Claim 1, **characterized in that** the edge uncoupling rubber (7) has a secant modulus at 10% elongation comprised between 3 and 70 MPa.

3. Tyre according to Claim 1, **characterized in that** a layer of edge uncoupling rubber (7) is positioned at each of the transverse ends of the belt reinforcer (3).

4. Tyre according to Claim 1, **characterized in that** the layer of edge uncoupling rubber (7) is positioned radially, at at least a first transverse end of the belt reinforcer (3), both underneath and on top of the reinforcing ply so as to form a turn-up around the reinforcing ply (6).

5. Tyre according to Claim 4, **characterized in that** the layer of edge uncoupling rubber (7) is positioned both underneath and on top of the reinforcing ply so as to form a turn-up of the reinforcing ply (6) at the second transverse end of the belt reinforcer (3).

6. Tyre according to one of the preceding claims, **characterized in that** each layer of coating rubber of the reinforcing layer is a diene rubber.

7. Tyre according to one of the preceding claims, **characterized in that** each layer of coating rubber of the polymer reinforcing layer is made of thermoplastic polymer.

8. Tyre according to one of the preceding claims, **characterized in that** each layer of coating rubber of the polymer reinforcing layer comprises at least one liquid plasticizer.

9. Tyre according to one of the preceding claims, **characterized in that** each layer of coating rubber of the polymer reinforcing layer comprises at least one tackifying resin.

10. Tyre according to one of the preceding claims, **characterized in that** each layer of coating rubber of the polymer reinforcing layer has a secant modulus at 10% elongation, denoted Ms, greater than or equal to 30 MPa, preferably comprised between 40 and 120 MPa.

11. Tyre according to one of the preceding claims, **characterized in that** each layer of coating rubber of the polymer reinforcing layer is based on a diene rubber selected from the group consisting of polybutadienes, natural rubber, synthetic polyisoprenes, various copolymers of butadiene, various copolymers of isoprene, and mixtures of these elastomers.

12. Tyre according to one of the preceding claims, **characterized in that** the polymer of the said reinforcing polymer layer is multiaxially stretched.

13. Tyre according to one of the preceding claims, **characterized in that** the reinforcing strips have a width at least equal to five times their maximum thickness and preferably at least equal to 20 times their maximum thickness.

14. Tyre according to one of the preceding claims, **characterized in that** the reinforcing strips have a tensile modulus greater than or equal to 500 MPa.

15. Tyre according to one of the preceding claims, **characterized in that** the polymer layer forms a film which, whatever the direction of tension considered in the plane of the film, has a Young's modulus E which is greater than 1000 MPa, preferably greater than 2000 MPa.

16. Tyre according to one of the preceding claims, **characterized in that** the polymer is the thermoplastic polymer PET.

17. Tyre according to one of the preceding claims, **characterized in that** the filamentary reinforcing elements are based on a material selected from at least one element of the group consisting of steel, textile, carbon fibre, glass fibre, thermoplastic polymer.

18. Tyre according to Claim 17, **characterized in that** the textile is selected from at least one element of the group consisting of polyester, aramid, nylon, rayon.

19. Tyre according to one of the preceding claims, **characterized in that** it comprises at least one electrically conducting rubber positioned between the belt reinforcer and the tread.
